(19) **Europäisches Patentamt / European Patent Office / Office européen des brevets**

(11) **EP 1 624 228 B1**

(12) **EUROPEAN PATENT SPECIFICATION**

(45) Date of publication and mention
of the grant of the patent:
**12.10.2011 Bulletin 2011/41**

(51) Int Cl.:
**F16H 25/22** (2006.01)

(21) Application number: **05017076.0**

(22) Date of filing: **05.08.2005**

(54) **Ball circulating member and ball screw**

Kugelumlaufmechanismus und Kugelgewindetrieb

Mécanisme à recirculation de billes et vis à billes

(84) Designated Contracting States:
**DE**

(30) Priority: **06.08.2004 JP 2004230730**
**11.08.2004 JP 2004234303**

(43) Date of publication of application:
**08.02.2006 Bulletin 2006/06**

(73) Proprietor: **NSK Ltd.**
**Shinagawa-ku,**
**Tokyo (JP)**

(72) Inventors:
• **Ohkubo, Tsutomu**
**Fujisawa-shi**
**Kanagawa (JP)**

• **Hayashi, Eiji**
**Fujisawa-shi**
**Kanagawa (JP)**
• **Kajita, Toshiharu**
**Fujisawa-shi**
**Kanagawa (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
EP-A- 0 418 999      US-A1- 2003 172 759
US-A1- 2003 233 898      US-A1- 2004 123 691

**Description**

BACKGROUND OF THE INVENTION

This invention relates to a ball screw used in various industrial machines and the like.

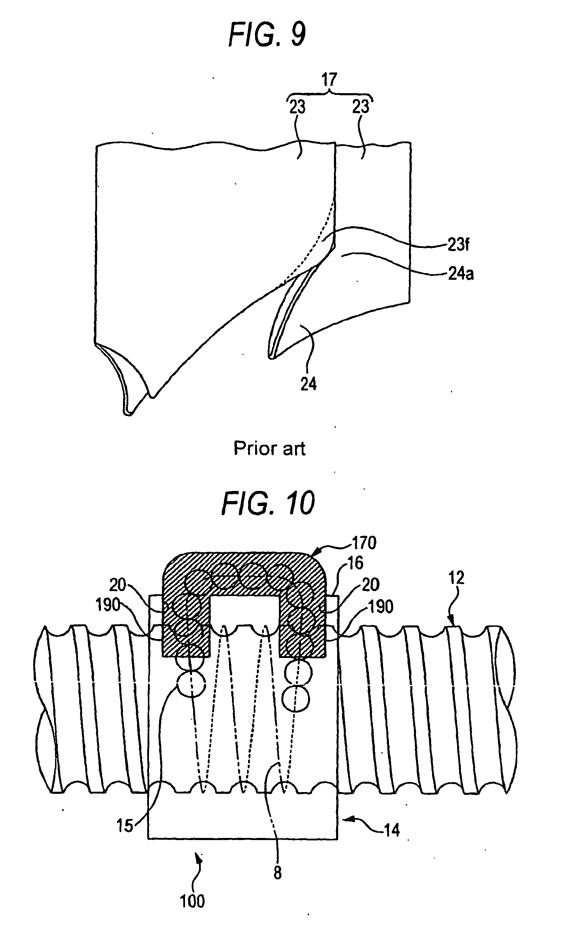

As shown in Fig. 10, a ball screw 100 of this kind includes a threaded shaft 12 which has a spiral ball rolling groove formed in an outer peripheral surface thereof, and extends in an axial direction. A nut 14, having a spiral ball rolling groove (corresponding to the ball rolling groove in the threaded shaft) formed in an inner peripheral surface thereof, is fitted on the threaded shaft 12. The ball rolling groove of the nut 14 and the ball rolling groove of the threaded shaft 12 are opposed to each other to form a ball track passageway 8 therebetween. A plurality of balls 15 (serving as rolling members) are rollably provided in the ball track passageway 8.

In recent years, ball screws of the type described have extensively employed the type of ball circulating member in which in order to ensure the smooth circulation of balls (that is, in order to smoothly guide the balls, rolling in a spiral ball track passageway, into the ball circulating member and also to smoothly return the balls, moving in the ball circulating member, to the ball track passageway), the balls are scooped-up in a direction tangential to the ball track passageway, and are returned to the ball track passageway in a direction tangential to the ball track passageway (see, for example, Patent Literature 1).

For example, in the ball screw of the type described, a ball circulating member-mounting surface 16 (which is formed or defined by a flat surface) is formed on the outer peripheral surface of the nut 14 as shown in Fig. 10. A pair of slots 20 are formed in the ball circulating member-mounting surface 16, and these slots 20 are in communication with the ball track passageway 8. A ball circulating member 170 is mounted on this ball circulating member-mounting surface 16 (see, for example, Patent Literature 2).

[Patent Literature 1]

JP-A-2003-232421

[Patent Literature 2]

JP-A-2005-083519 (corresponding to U.S. Patent Publication No. US 2005/0087031 A1)

Further, US 2004/0 123 691 A1, which is considered as the closest prior art, discloses the preamble of claim 1.

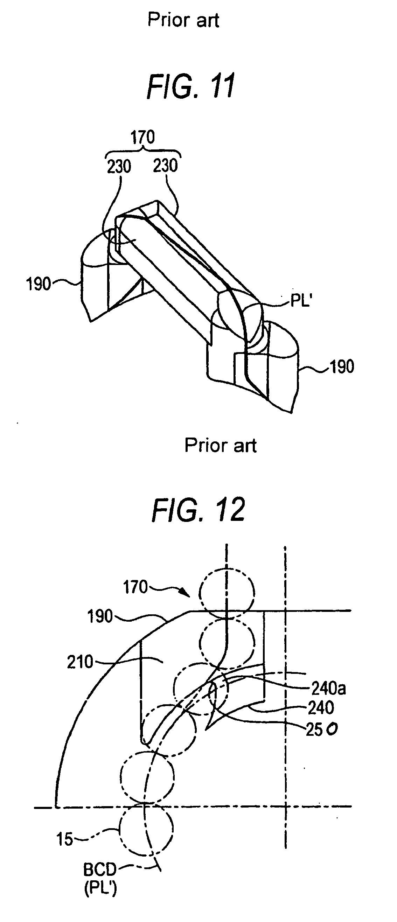

As shown in Fig. 10, the ball circulating member 170 has a pair of leg portions 190 formed respectively at opposite sides of a central portion thereof. As shown in Fig. 11, the pair of leg portions 190 are inclined in opposite directions at a predetermined angle relative to the central portion of the ball circulating member 170 so as to correspond to a lead angle of the threaded shaft 12. The pair of leg portions 190 can be closely fitted respectively into the slots 20 (formed in the ball circulating member-mounting surface 16) in a direction perpendicular to the threaded shaft 12.

The ball circulating member 170 of this kind is made, for example, of a synthetic resin, and is formed by combining a pair of ball circulating member-forming members 230 and 230 together as shown in Fig. 11. Namely, a ball circulating passageway for circulating the balls 15 therein is formed within the ball circulating member 170, and the ball circulating member 170 comprises the pair of side cap-forming members 230 and 230 divided from each other along a division line (extending in a direction of advancing of the balls 15 in the ball circulating member 170). Reference character PL' in Fig. 11 denotes the division line along which the ball circulating member 170 is divided into the two side cap-forming members 230.

It may be proposed to set the division line PL' in conformity with a path of movement of the centers of the balls 15. Namely, when the division line PL' is set to such a position, and the ball circulating member 170 is divided into the pair of side cap-forming members 230 and 230, the two ball circulating member-forming members 230 substantially equally surround or embrace the peripheries of the balls 15, and therefore it is thought that this division position is desirable and effective in stabilizing the ability of restraining the balls 15.

However, usually, the ball circulating member 170 has a ball scoop-up portion 240 formed at a distal end portion of a ball scoop-up (return) passageway 210 of the ball circulating member 170 as shown in Fig. 12. The ball scoop-up portion 240 has such a tongue-like shape that it can be inserted into the ball rolling groove of the threaded shaft 12 so as to smoothly scoop-up (or pick-up) the ball 15 (rolling in the ball track passageway 8) from the ball track passageway 8 to guide it into the ball scoop-up (return) passageway 210. This ball scoop-up portion 240 projects from the ball scoop-up (return) passageway 210 toward the ball rolling groove. Therefore, a notch portion 250 is formed at a scoop-up proximal end portion 240a interconnecting the ball scoop-up portion 240 and the ball scoop-up (return) passageway 210, the notch portion 250 being, for example, in the form an acute-angle V-shaped groove.

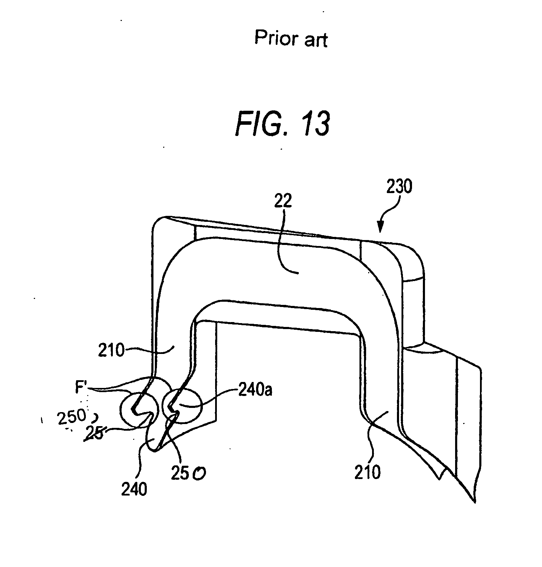

Therefore, when the division line PL' is set in conformity with the path (indicated by a line BCD in Fig. 12) of movement of the centers of the balls over the entire length of the ball circulating member 170 as shown in Fig. 12, the notch portion 250 remains at the scoop-up proximal end portion 240a as it is (see portions F' in Fig. 12) as shown in Fig. 13.

Namely, in the case where the division line PL' at the scoop-up proximal end portion 240a is merely set in such a position, the notch portion 250 at the scoop-up proximal end portion 240a becomes a starting point of breakage due to concentrated stresses when a load is repeatedly applied to the ball scoop-up portion 240 as during high-speed rotation of the ball screw 100, and there is a fear that this becomes the cause for preventing a high-speed design.

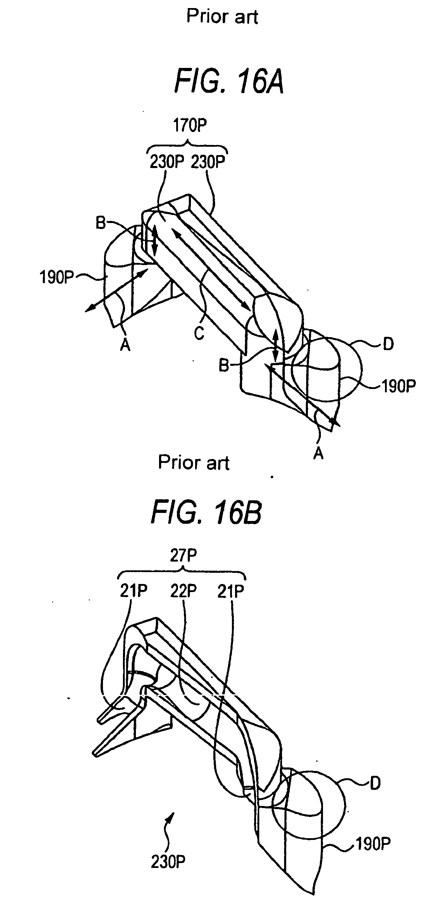

Further, as shown in Fig. 16A, a ball circulating member 170p is mounted on the ball circulating member-mounting surface 16p.

The ball circulating member 170p of this kind is made, for example, of a synthetic resin, and is formed by combining a pair of ball circulating member-forming members 230p and 230p together as shown in Fig. 16A. A ball circulating passageway 27p is formed within the ball circulating member 170p as shown in Fig. 16B. The ball circulating passageway 27p includes a pair of guide passageways 21p formed respectively at opposite ends of a central passageway 22p in continuous relation thereto. The guide passageways 21p are formed or defined respectively by peripheral walls surrounding these guide passageways 21p, and these peripheral walls form a pair of leg portions 190p, respectively (see Fig. 16A).

As shown in Figs. 16A and 16B, the pair of leg portions 190p are inclined in opposite directions at a predetermined angle relative to the central passageway 21p so as to correspond to a lead angle of the threaded shaft 12p, and these leg portions 190p, together with the guide passageways 22p formed therein, are formed in a three-dimensional manner. The pair of leg portions 190p can be closely fitted respectively into the ball circulating member-mounting holes 20p (formed in the ball circulating member-mounting surface 16p) in a direction perpendicular to the threaded shaft 12p. In Fig. 16A, an image of a path of movement of the balls 15p, moving in the ball circulating passageway 27p in a three-dimensional manner, is indicated by arrows A to C.

However, the ball circulating member 170p of this kind is formed into such a structure that the pair of leg portions 190p can be closely fitted respectively into the ball circulating member-mounting holes 20p in the direction perpendicular to the threaded shaft 12p as described above. As a result, a thickened portion (indicated by reference character D in Fig. 16) is formed locally at each leg portion 190p. Therefore, the thickness of the ball circulating member 170p is not uniform over the entire length thereof. Therefore, the shrinkage of a molding material is not uniform over the entire length of the molded product during the molding operation, and therefore it is difficult to enhance the precision of the ball circulating passageway formed within the ball circulating member 170p.

And besides, when a mold is to be formed, a correction for dealing with the uneven thickness must be taken into consideration. Furthermore, there has been encountered a problem that in order that the smooth movement of the balls in the ball circulating passageway will not be prevented, it is necessary to take some measure, for example, to correct the mold in such a manner that the inner diameter of the ball circulating passageway is beforehand increased. In addition, in case the inner diameter of the ball circulating passageway becomes too large by such correction for beforehand increasing the inner diameter of the ball circulating passageway, there is a fear that the balls are arranged in a staggered manner within the ball circulating passageway, and interfere with one another. Particularly when the ball circulating member 170p is made of a resin, there is a fear that wear develops within the ball circulating passageway.

### SUMMARY OF THE INVENTION

This invention is made in view of the above problem, and an object of the invention is to provide a ball circulating member as well as a ball screw, in which the strength of a relatively-weak scoop-up proximal end portion of the ball circulating member is improved, thereby enhancing a high-speed operation performance and a duration performance.

Further, another object of the invention is to provide a ball circulating member as well as a ball screw, in which the precision of a ball circulating passageway, formed within the ball circulating member, can be enhanced.

For solving the above problem, there is provided a ball circulating member according to claim 1.

With respect to the term "the deepest portion of the notch portion", when the notch portion is, for example, has a V-shape, the deepest portion is an apex of this V-shape, and when the notch portion has a U-shape or a semi-circular shape, the deepest portion is that portion of this U-shape or this semi-circular shape which is most recessed toward the inside of the ball circulating passageway.

The invention is claimed according to the subjet-matter of claims 1 to 5.

### DETAILED DESCRIPTION OF THE DRAWINGS

Fig. 1 is a view explanatory of a side cap-type ball screw of the present invention.
Fig. 2 is a transverse cross-sectional view of an important portion of the ball screw of Fig. 1.
Fig. 3 is a view as seen in a direction of arrow E of Fig. 2, showing a nut on which a side cap is not yet mounted.

Fig. 4 is a view as seen in the direction of arrow E of Fig. 2, showing the nut on which the side cap of the invention is mounted.

Fig. 5 is an explanatory view showing the side cap of the invention.

Fig. 6 is an explanatory view showing a side cap-forming member.

Fig. 7 is an enlarged explanatory view showing an important portion (a portion F in Fig. 6) of a division line of the side cap of the invention.

Fig. 8 is an explanatory cross-sectional view showing a condition in which peripheral walls are combined together at a scoop-up proximal and portion.

Fig. 9 is an explanatory perspective view showing the condition in which the peripheral walls are combined together at the scoop-up proximal end portion.

Fig. 10 is a view showing a conventional side cap-type ball screw.

Fig. 11 is an explanatory perspective view showing a conventional side cap of a comparative example.

Fig. 12 is an enlarged explanatory view showing an important portion of a division line conventionally set in conformity with a path of movement of centers of balls.

Fig. 13 is an explanatory perspective view showing a condition in which the conventional side cap is divided along the division line conforming with the path of movement of the centers of the balls.

Figs. 14A and 14B are explanatory views showing a third, not claimed, embodiment of a side cap, and Fig. 14A is an explanatory perspective view showing the appearance of the side cap, and explaining a path of movement of centers of balls in the side cap, and Fig. 14B is an explanatory perspective view showing a side cap-forming member of the divided side cap.

Figs. 15A and 15B are explanatory views showing a fourth, not claimed, embodiment of a side cap, and Fig. 15A is a perspective view explanatory of a foreign matter intrusion prevention lid portion, and Fig. 15B is an enlarged perspective view of an important portion (a leg portion in Fig. 15A) explanatory of the foreign matter intrusion prevention lid portion.

Fig. 16 is a perspective view explanatory of a conventional side cap of a comparative example.

## DETAILED DESCRIPTION OF THE PREFERRED EMBODIMENTS

Preferred embodiments of the present invention will now be described with reference to the drawings.

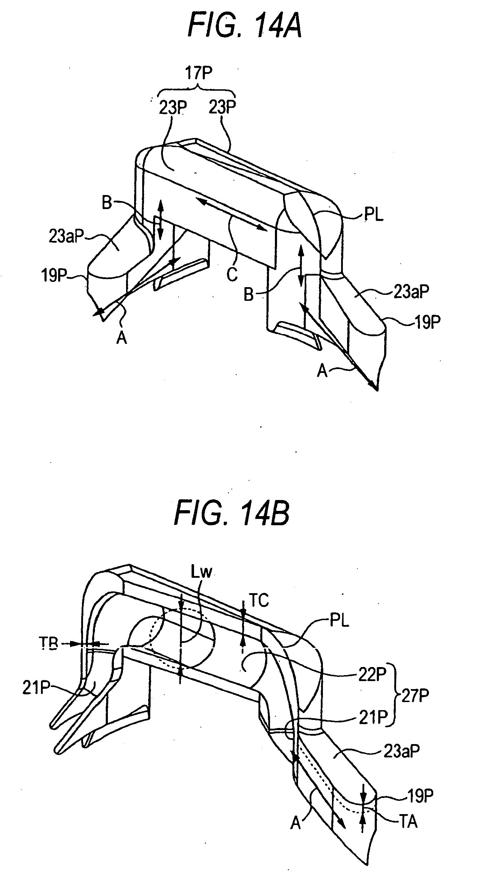

One points out expressly that the third and fourth embodiment described with reference to Figures 14A to 15B do not fall under the scope of the appended claims and constitute examples useful for understanding the present invention.

In each embodiment described below, those portions similar to those of the above-mentioned ball screw will be designated by identical reference numerals, respectively.

(First Embodiment)

First, the first embodiment of the invention will be described.

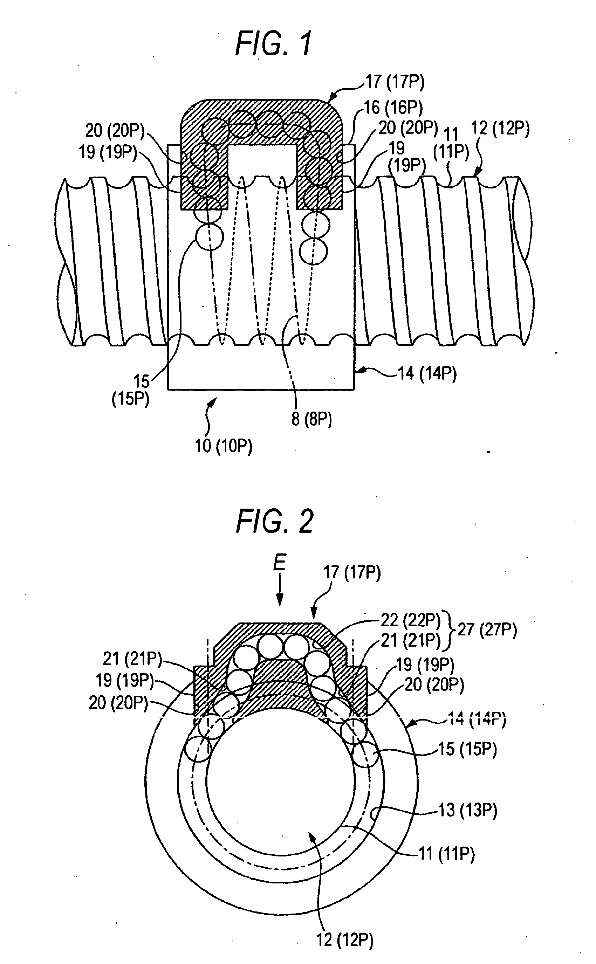

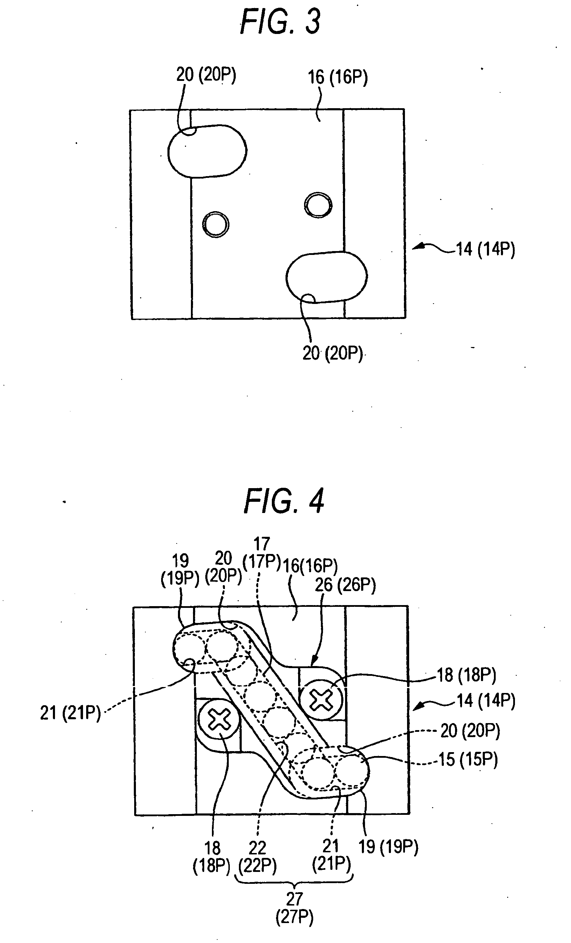

Fig. 1 is a view explanatory of a side cap-type ball screw of the invention, Fig. 2 is a transverse cross-sectional view of an important portion of the ball screw of Fig. 1, Figs. 3 and 4 are views as seen in a direction of arrow E of Fig. 2, and Fig. 3 shows a nut on which a side cap is not yet mounted, while Fig. 4 shows the nut on which the side cap of the invention is mounted.

As shown in Figs. 1 and 2, this ball screw 10 comprises a threaded shaft 12, and the nut 14.

The threaded shaft 12 has a spiral ball rolling groove 11 formed in an outer peripheral surface thereof. The nut 14 has a spiral ball rolling groove 13 which is formed in an inner peripheral surface thereof, and corresponds to the ball rolling groove 11 of the threaded shaft 12. The nut 14 is fitted on the threaded shaft 12, and the ball rolling groove 13 of the nut 14 and the ball rolling groove 11 of the threaded shaft 12 are opposed to each other to form a ball track passageway 8 therebetween. A plurality of balls 15 (serving as rolling members) are rollably provided in the ball track passageway 8.

As shown in Fig. 3, a side cap-mounting surface 16, defined by a rectangular flat surface, is formed on the outer peripheral surface of the nut 14. A pair of slots 20 are formed in the side cap-mounting surface 16. These slots 20 are in communication with the ball track passageway 8 formed between the ball rolling grooves 11 and 13.

As shown in Fig. 4, the side cap 17, serving as a ball circulating member, is mounted on the side cap-mounting surface 16. The side cap 17 has a pair of leg portions 19, and the pair of leg portions 19 can be closely fitted respectively into the slots 20 (formed in the side cap-mounting surface 16) in a direction perpendicular to the threaded shaft 12 (see Fig. 1). As shown in Fig. 4, the whole of the side cap 17 is held against the side cap-mounting surface 16 by a lid-like side cap cover 26 (which covers the whole of the side cap 17), and is secured to the nut 14 by set screws 18.

A ball scoop-up (return) passageway 21 is formed in each of the leg portions 19 of the side cap 17 (see Fig. 2). The direction of extending of the ball scoop-up (return) passageway 21 is inclined relative to an outer peripheral surface of the leg portion 19. The ball scoop-up (return) passageway 21 is inclined in a direction along a direction of a ball circulating passageway. Each ball scoop-up (return) passageway 21 is in communication with a ball feed passageway 22, and this ball feed passageway 22 and the pair of ball scoop-up (return) passageways 21 jointly form the ball circulating passageway 27.

Namely, as shown in Figs. 2 and 4, the side cap 17 has the ball circulating passageway 27 (which has a unitary construction over an entire length thereof in the direction of extending of this ball circulating passageway 27) formed by the ball scoop-up (return) passageways 21 and the ball feed passageway 22. And besides, despite the fact that the leg portions 19 can be easily fitted respectively into the slots 20 in the side cap-mounting surface 16, the direction of advancing of the balls 15 in each ball scoop-up (return) passageway 21 (formed within the leg portion 19) is formed in such a three-dimensional manner that the balls can be scooped-up in a direction which conforms with a direction substantially tangential to the threaded shaft 12, and also substantially conforms with a lead angle of each of the ball rolling grooves 11 and 13. Therefore, the formation of the nut 14 is easy, and besides the degree of freedom of the design for the ball circulating passageway 27 (that is, the ball scoop-up (return) passageways 21 and the ball feed passageway 22) can be enhanced.

An endless circulating passageway for the balls 15 is formed by the ball circulating passageway 27 and the ball track passageway 8. For example, an output shaft of a motor (not shown) can be connected to one end of the threaded shaft 12 via a coupling, and when the threaded shaft 12 is rotated, the nut 14 is moved in the axial direction through the rolling balls 15.

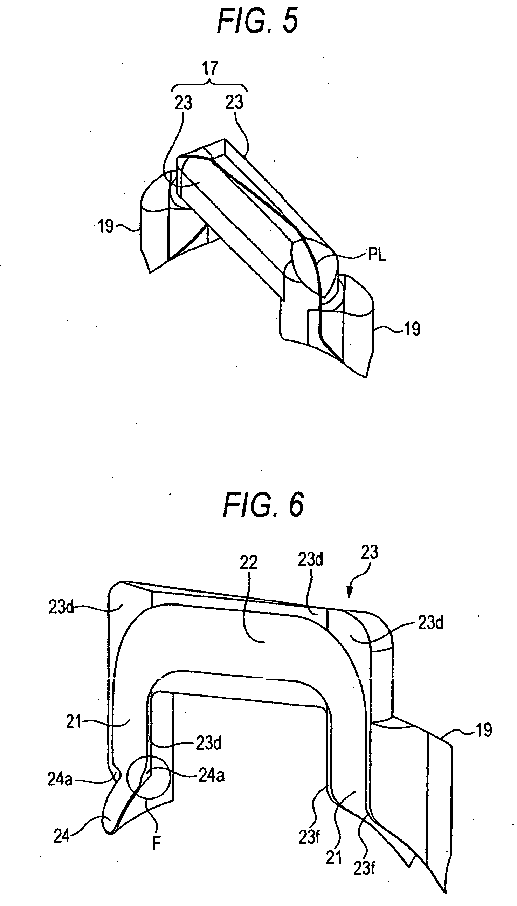

Next, the division structure of the side cap 17 will be described in detail. Figs. 5 and 6 are explanatory views showing the side cap of the invention, and Fig. 5 is a perspective view of the side cap, and Fig. 6 is a perspective view showing one of side cap-forming members of the side cap divided from each other.

The side cap 17 is molded of a resin, and is formed by combining the resin-molded side cap-forming members (the pair of ball circulating member-formingmembers) 23 and 23 together. In Fig. 5, a line, designated by reference character PL, indicates a division line along which the ball circulating member 17 is divided into the two side cap-forming members 23.

As shown in Fig. 6, the side cap 17 has the ball circulating passageway 27 (formed by the ball scoop-up (return) passageways 21 and the ball feed passageway 22) formed therein, and comprises the two side cap-forming members 23 divided from each other in a point-symmetrical manner along the direction of advancing of the balls 15. Therefore, division surfaces 23d (serving respectively as joint surfaces to be joined together) are formed respectively at the two side cap-forming members 23 at a region where the two side cap-forming members 23 are divided from each other along the division line PL as shown in Fig. 6.

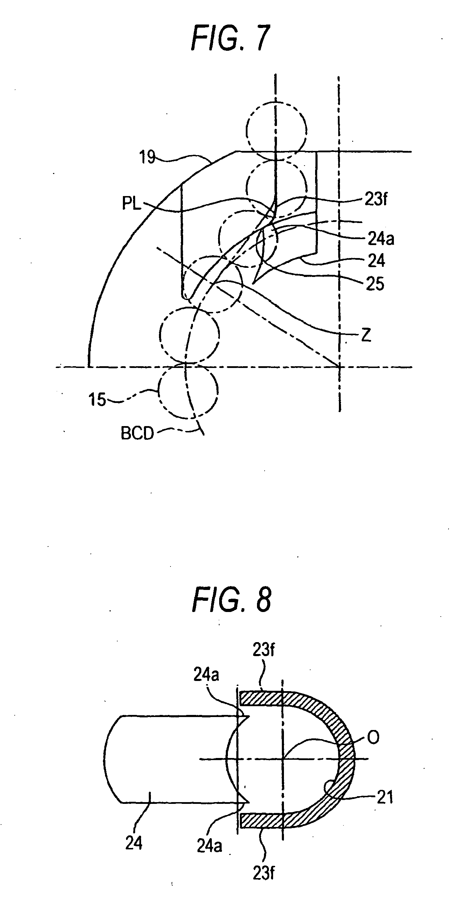

Next, the division line PL (or the division surface 23d) along which the two side cap-forming members 23 are divided from each other will be described in more detail. Fig. 7 is an enlarged explanatory view showing an important portion (that is, a portion F of Fig. 6 and its vicinity) of the division line of the side cap, and this Figure shows a division example at a scoop-up proximal end portion of a ball scoop-up portion of the invention. Figs. 8 and 9 are views explanatory of a condition of combination of peripheral walls of the pair of side cap-forming members with each other in the vicinity of the scoop-up proximal end portion.

As described above, the side cap 17 is divided into the two side cap-forming members 23 along the division line PL, and therefore the pair of side cap-forming members 23 and 23 have the division surfaces (joint surfaces) 23d, respectively (see Fig. 6).

As shown in Fig. 7, the side cap 17 has the ball scoop-up portion 24 formed at a distal end portion of each ball scoop-up (return) passageway 21. The ball scoop-up portion 24 has such a tongue-like shape that it can be inserted into the ball rolling groove 11 of the threaded shaft 12 so as to smoothly scoop-up (or scoop up) the ball 15 (rolling in the ball track passageway 8) from the ball track passageway 8 to guide it into the ball scoop-up (return) passageway 21. This ball-scoopup portion 24 projects from the ball scoop-up (return) passageway 21 toward the ball rolling groove 11. Therefore, a notch portion 25 is formed at the scoop-up proximal end portion 24a interconnecting the ball scoop-up (return) passageway 21 (formed in the leg portion 19) and the ball scoop-up portion 24, the notch portion 25 being, for example, in the form of an acute-angle V-shaped groove.

In the side cap 17 of the invention, the division line PL (which divides the side cap 17 into the two side cap-forming members 23 and 23) is formed in such a position that it beforehand cuts the notch portion 25 at one side of the side cap 17 and the notch portion 25 at the other side at their apexes (of the V-shaped notch portions 25), and in this manner the division surfaces 23d of the two side cap-forming members 23 are formed.

The division line PL continuously extends smoothly at a peripheral wall extension portion 23f (which is formed by an arc-shaped portion and a straight portion continuous with this arc-shaped portion) in the vicinity of each scoop-up proximal end portion 24a as shown in Fig. 7. In other words, as shown in Fig. 6, in the vicinity (that is, the portion F shown in this Figure) of the scoop-up proximal end portion 24a, the division line PL in this scoop-up proximal end portion 24a is so positioned that the division surface 23d of the ball circulating member-forming member 23 is deviated (at that side remote from the ball scoop-up portion 24, and is close to the leg portion 19 in this Figure) toward the ball scoop-up portion 24 with respect to the path of movement of the centers of the balls 15 so as to form the peripheral wall extension portion 23f. Therefore, the division surface 23d at the scoop-up proximal end portion 24a is formed by gently-curving ridge portions of the peripheral wall extension portion 23f, and therefore the concentration of stresses on the scoop-up proximal end portion 24a can be more suitably reduced. In Fig. 7, reference character Z denotes a point at which each ball 15 is scooped-up. The side cap 17 is divided into the two sections over the entire length thereof as described above, and except the vicinities of the proximal end scoop-up portions 24a, the division line PL is formed in conformity with the path of movement of the centers of the balls such that the two side cap-forming members 23 substantially equally surround or embrace the peripheries of the balls.

Next, the operation and advantages of the ball screw 10 and side cap 17 of the first embodiment will be described.

As described above, in this ball screw 10, the side cap 17 is mounted on the side cap-mounting surface 16 of the nut 14, and each of the balls 15, rolling between the ball rolling grooves 11 and 13, is scooped-up by the ball scoop-up portion 24 of the side cap 17 in the direction of the lead angle of the ball rolling grooves 11 and 13, and is smoothly guided into the ball feed passageway 22. Therefore, in this ball screw 10, even when the lead of the ball rolling grooves is large as in a tube circulating-type ball screw, the direction of advancing of the balls 15 is hardly abruptly changed at the ball circulating portion. Therefore, damage of the balls 15 and the generation of noises can be suppressed when scooping-up the ball 15. And besides, the number of ball-circulating circuits is not limited to the number of threads of a screw groove as opposed, for example, to an end cap-type ball screw, and therefore a load capacity can be increased without increasing the number of balls (the number of turns).

In the ball screw 10, the side cap 17 comprises the pair of ball circulating member-forming members 23 and 23 divided from each other along the direction of advancing of the balls 15, and therefore the ball circulating passageway 27 (by which each ball 15 is scooped-up in the direction conforming with the lead angel of the ball rolling grooves 11 and 13, and then is returned to the initial position) can be easily formed within the side cap 17 by resin molding or the like.

And besides, in the ball screw 10, the side cap 17 is formed by combining the pair of side cap-forming members 23 and 23 (having the same outer shape) together, and with this 5 construction the side cap-forming members 23 and 23 can be molded, using a single mold, and therefore the side cap 17 can be easily produced.

Furthermore, the division surface 23d of each of the side cap-forming members 23 and 23 is formed by the division line PL which beforehand cuts the notch portion 25 (formed at the scoop-up proximal end portion 24a of the ball scoop-up portion 24) at the deepest portion thereof. Namely, in the side cap 17, the division line PL, dividing the two side cap-forming members 23 and 23 from each other, is formed in such a position that it beforehand cuts the notch portions 25 formed respectively at the scoop-up proximal end portions 24a. Therefore, even when an impact is applied from the ball 15 (circulating in the side cap 17) to the side cap-forming members 23, there is hardly a fear of a fatigue failure starting at the scoop-up proximal end portion 24a or its vicinity. Therefore, the high-speed operation performance and duration performance of the ball screw 10 can be enhanced.

As described above, the side cap is divided in such a manner that the division line PL starts from (and terminates at) the deepest portions of the notch portions 25. As a side effect of this construction, the division surface of each ball circulating member-forming member 23 is deviated (at the side remote from the ball scoop-up portion 24) toward the ball scoop-up portion 24 with respect to the path of movement of the centers of the balls 15. Therefore, there is a fear that the ability of restraining the balls 15 by the peripheral walls in the vicinity of the scoop-up proximal end portion 24a becomes unstable.

(Second Embodiment)

Therefore, as a second embodiment of the invention, description will be made of a configuration which can reduce the concentration of stresses on the scoop-up proximal end portion, and also can stabilize the ability of restraining the balls in the vicinity of the scoop-up proximal end portion.

A side cap 17 of this second embodiment differs from the side cap 17 of the first embodiment only in the configuration of a peripheral wall extension portion 23f, and the other construction is identical to that of the first embodiment described above. Therefore, only the configuration of the peripheral wall extension portion 23f will be described, and explanation of the other portions and members will be omitted.

In the side cap 17 of this second embodiment, the peripheral wall extension portion 23f (forming a peripheral wall) (at which the division line PL is deviated) of each of two side cap-forming members 23 and 23 is extended to cover opposite sides of the scoop-up proximal end portion 24a of the mating ball circulating member-forming member 23 as shown in Figs. 8 and 9.

With this construction, although the division position is so determined that the peripheral walls of the two ball circulating member-forming members 23 and 23 surround the ball in a different ratio at each scoop-up proximal end portion 24a, the peripheral walls are combined together in such a manner that one of the peripheral walls covers the other peripheral wall as shown in Fig. 8. Therefore, the ability of restraining the ball by the peripheral walls in the vicinity of the scoop-up proximal end portion 24a can be stabilized. In Fig. 8, reference character O denotes the center of the ball 15.

In the side cap 17 of the second embodiment, thus, the two side cap-forming members 23 and 23 can be combined together in such a manner that the peripheral wall extension portion 23f of each side cap-forming member 23 covers the opposite sides of the scoop-up proximal end portion 24a of the mating side cap-forming member 23. Therefore, the ability of restraining the ball by the peripheral walls in the vicinity of the scoop-up proximal end portion 24a can be stabilized.

As described above, in the ball screw 10 of the invention, the strength of the scoop-up proximal end portion 24a (which has a reduced strength) of the ball scoop-up portion 24 of the side cap 17 (serving as the ball circulating member) is improved, and by doing so, the side cap 17 which can enhance the high-speed operation performance and the duration performance, as well as the ball screw 10 with this side cap 17, can be provided.

The ball screw of the invention is not limited to the above embodiments, and various modifications can be made without departing from the subject matter of the invention as defined by the claims.

For example, in each of the above embodiments, projections and holes, serving as positioning means, can be provided at the division surfaces (joint surfaces) 23d so as to position the two division surfaces relative to each other. Side cap-mounting holes for directly passing the set screws 18 therethrough can be formed in the side cap 17.

In the above embodiments, the division line PL (along which the side cap 17 is divided over the entire length thereof) is set in conformity with the path of movement of the centers of the balls in a manner to equally divide the side cap except the vicinity of each scoop-up proximal end portion 24a. However, the invention is not limited to this construction, and the division line can be so set as not to achieve such a equally-dividing structure. However, in order that the two ball circulating member-forming members can substantially equally surround the balls so as to stabilize the ability of restraining the balls, preferably, the division line PL is set in conformity with the path of movement of the centers of the balls in a manner to equally divide the side cap except the vicinity of each scoop-up proximal end portion.

In the above embodiments, although the notch portion 25, formed at the scoop-up proximal end portion 24a, takes the form of the acute-angle V-shaped groove, the notch portion 25 is not limited to such V-shaped groove. Namely, the notch portion need only to include a concave portion such as a recess and a groove, and for example the notch portion can have a U-shape or a semi-circular shape.

In the ball screw 10 of the above embodiments, although the side cap 17 (the side cap-forming members 23 and 23) is made of the resin, the side cap 17 can be formed, for example, by metal, for example, using a sintered material such as sintered steel or metal injection molding (MIM). With this construction, the ball screw can be used even in a high-temperature condition under which the use of the resin-molded side cap is not suited.

Further, a guide passageway 21p for scooping-up the balls from the ball track passageway 8p or returning the balls to the ball track passageway 8p is formed in each of the leg portions 19p of the side cap 17p (see Fig. 2). The direction of extending of the guide passageway 21p is inclined relative to an outer peripheral surface of the leg portion 19p. Namely, the guide passageway 21p is inclined in a direction along a direction of a ball circulating passageway. Each guide passageway 21p is in communication with a central passageway 22p, and this central passageway 22p and the pair of guide passageways 21p jointly form the ball circulating passageway 27p. An endless circulating passageway for the balls 15p is formed by the ball circulating passageway 27p and the ball track passageway 8p. For example, an output shaft of a motor (not shown) can be connected to one end of the threaded shaft 12p via a coupling, and when the threaded shaft 12p is rotated, the nut 14p is moved in the axial direction through the rolling balls 15p.

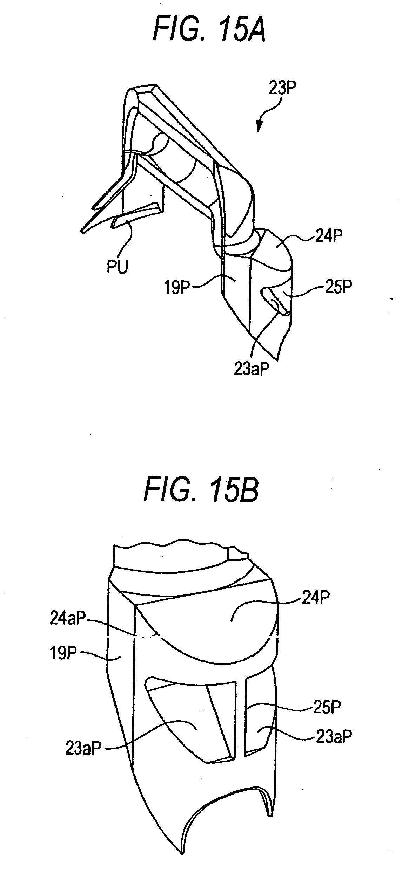

More specifically, as shown in Figs. 2 and 4, the side cap 17p has the ball circulating passageway 27p (which has a unitary construction over an entire length thereof in the direction of extending of this ball circulating passageway 27p) formed by the guide passageways 21p and the central passageway 22p. And besides, despite the fact that the leg portions 19p can be easily fitted respectively into the ball circulating member-mounting holes 20p in the side cap-mounting surface 16p, the direction of advancing of the balls 15p in each guide passageway 21p (formed within the leg portion 19p) is formed in such a three-dimensional manner that the balls can be scooped-up in a direction which conforms with a direction substantially tangential to the threaded shaft 12p, and also substantially conforms with a lead angle of each of the ball rolling grooves 11p and 13p. Therefore, the formation of the nut 14p is easy, and besides the degree of freedom of the design for the ball circulating passageway 27p (that is, the guide passageways 21p and the central passageway 22p) can be enhanced. The side cap 17p has a ball scoop-up portion (indicated by reference character PU in Fig. 15) formed at a distal end portion of each guide passageway 21p. The ball scoop-up portion has such a tongue-like shape that it can be inserted into the ball rolling groove 11p of the threaded shaft 12p so as to smoothly scoop-up (or scoop up) the ball 15p (rolling in the ball track passageway 8p) from the ball track passageway 8p to guide it into the guide passageway 21p. This ball scoop-up portion projects from the guide passageway 21p toward the ball rolling groove 11p.

Next, the peripheral wall, forming the side cap 17p, as well as the ball circulating passageway formed therein, will be described in more detail. Figs. 14 and 15 are explanatory views showing the side cap 17p, and Fig. 14 is a perspective view of the side cap, and Fig. 14A shows a condition in which side cap-forming members are combined together, and Fig. 14B shows one side cap-forming member.

The side cap 17p is molded of a resin, and is formed by combining the resin-molded side cap-forming members (the pair of ball circulating member-forming members) 23p and 23p together. In Fig. 14, a line, designated by reference character PL, indicates a division line along which the ball circulating member 17p is divided into the two side cap-forming members 23p. The division line PL (along which the side cap 17p is divided over the entire length thereof) is uniformly formed in conformity with the path of movement of the centers of the balls such that the two side cap-forming members 23p substantially equally surround or embrace the peripheries of the balls. The two side cap-forming members 23p are divided from each other in a point-symmetrical manner with respect to the division line PL.

The ball circulating passageway 27p, formed by the guide passageways 21p and the central passageway 22p, is formed within the divided side cap 17p as shown in Fig. 14B.

Namely, the ball circulating passageway 27p, formed within the side cap 17p, includes the pair of guide passageways 21p formed respectively at the opposite ends of the central passageway 22p in continuous relation thereto. The guide passageways 21p are formed or defined respectively by peripheral walls surrounding these guide passageways 21p, and these peripheral walls form the pair of leg portions 19p, respectively (see Fig. 14A). The pair of leg portions 19p are inclined so as to correspond to the lead angle of the threaded shaft 12p, that is, inclined in opposite directions at a predetermined angle relative to the central passageway 21p as shown in Figs. 14A and 14B, and these leg portions 19p, together with the guide passageways 22p formed therein, are formed in a three-dimensional manner. In Fig. 14A, the direction of advancing of the balls 15p in a three-dimensional manner is indicated by arrows A to C.

As shown in Fig. 14B, the peripheral wall, forming the guide passageways 21p, is formed by a peripheral wall surface 23ap disposed substantially parallel to the guide passageway 21p. A thickness TA of the peripheral wall, forming the guide passageway 21p, is substantially equal to a thickness TC of a peripheral wall forming the central passageway 22p and also to a thickness TB of a curved portion. Here, the term "the thickness is substantially equal (or substantially uniform)" means that a variation in the thickness of the peripheral wall is within $\pm 50\%$. Namely, when the variation in the thickness of the peripheral wall is within $\pm 50\%$, the shrinkage of a molding material during a molding operation is stabilized over the entire length of the molded product, and therefore this is desirable. And, when the variation in the thickness of the peripheral wall is within $\pm 20\%$, the shrinkage of the molding material during the molding operation is more stabilized, and therefore this is more desirable. Preferably, in addition to defining the thickness of the product over the entire length thereof, the product (ball circulating member) is molded in such a manner that a cross-sectional shape of the peripheral wall in a plane perpendicular to the direction of advancing of the balls is substantially uniform over the entire length (that is, the outer peripheral surface is substantially parallel to the inner peripheral surface regardless of the shape of the outer peripheral surface). When the thickness is reduced over the entire length so as to make the thickness substantially equal (substantially uniform) over the entire length, there is a fear that the product is fragile. In such a case, when a molding material, having a flexural modulus of less than 40 kg/cm$^2$ and an Izod impact value of not smaller than 5, is selected, this material is suitable since it can dissipate an impact value of the balls.

The peripheral wall of the side cap 17p has the substantially equal (substantially uniform) thickness over the entire length, and therefore when the inner diameter of the ball circulating passageway 27p is represented by Lw (see Fig. 14B), and the diameter of the ball 15p is represented by Dw, the ball circulating passageway 27p is formed in such a manner that the relation between Lw and Dw satisfies the following formula (1). In other words, the side cap 17p (the pair of ball circulating member-forming members 23p and 23p) is formed in such a manner that a variation in the thickness of the peripheral wall is within the range satisfying the following formula (1).

$$\mathtt{Lw - Dw \leq 0.1\ Dw} \qquad \mathtt{(1)}$$

(Third Embodiment)

Next, the operation and advantages of the ball screw 10p and side cap 17p of a not claimed third embodiment will be described.

As described above, in this ball screw 10p, the side cap 17p is mounted on the side cap-mounting surface 16p of the nut 14p, and each of the balls 15p, rolling between the ball rolling grooves 11p and 13p, is scooped-up by the ball scoop-up portion of the side cap 17p in the direction of the lead angle of the ball rolling grooves 11p and 13p, and is smoothly guided into the central passageway 22p. Therefore, in this ball screw 10p, even when the lead of the ball rolling grooves is large as in a tube circulating-type ball screw, the direction of advancing of the balls 15p is hardly abruptly changed at the ball circulating portion. Therefore, damage of the balls 15p and the generation of noises can be suppressed when scooping-up the ball 15p. And besides, the number of ball-circulating circuits is not limited to the number of threads of a screw groove as opposed, for example, to an end cap-type ball screw, and therefore a load capacity can be increased without increasing the number of balls (the number of turns).

In the ball screw 10p, the side cap 17p comprises the pair of ball circulating member-forming members 23p and 23p divided from each other along the direction of advancing of the balls 15p, and therefore the ball circulating passageway 27p (by which each ball 15p is scooped-up in the direction conforming with the lead angel of the ball rolling grooves 11p and 13p, and then is returned to the initial position) can be easily formed within the side cap 17p by resin molding or the like.

And besides, in the ball screw 10p, the side cap 17p is formed by combining the pair of side cap-forming members 23p and 23p (having the same outer shape) together, and with this construction the side cap-forming members 23p and 23p can be molded, using a single mold, and therefore the side cap 17p can be easily produced.

Particularly in this ball screw 10p, the outer surface of each peripheral wall 23ap, forming the guide passageway 21p, is substantially parallel to the path (indicated by arrow A) of movement of the balls in the guide passageway 21p. The thickness TA of this peripheral wall 23ap is substantially equal to the thickness TC of the peripheral wall forming the central passageway 22p. Namely, the thickness of the peripheral wall is substantially uniform (TA ≒ TC) over the entire length of the ball circulating passageway 27p. Therefore, the wall thickness of the side cap 17p is substantially uniform over the entire length thereof. Therefore, a variation in the shrinkage of the molding material hardly develops, so that the precision of the ball circulating passageway 27p, formed within the side cap 17p, can be enhanced.

And besides, the precision of the ball circulating passageway 27p is so controlled as to satisfy the above formula (1), and therefore the inner diameter of the ball circulating passageway 27p can be kept to below a desired allowable value. Therefore, fears that the balls 15p are arranged in a staggered manner and that the balls 15p interfere with each other are more diminished, and particularly when the side cap is made of a resin, wear within the ball circulating passageway can be suitably suppressed.

The pair of leg portions 19p of the side cap 17p can be closely fitted respectively into the pair of slot-like ball circulating member-mounting holes 20p in the direction perpendicular to the threaded shaft 12p (see Fig. 1). The outer surface of the peripheral wall 23ap of the guide passageway 21p, formed in each leg portion 19p, is disposed substantially, parallel to the path of movement of the balls as described above, and therefore the outer wall surface 23ap is formed in an inclined manner. Therefore, after the side cap 17p is mounted on the nut 14p, a recess is formed at a leg portion 19p-inserting side of each ball circulating member-mounting hole 20p. Namely, when the recess is formed at the leg portion 19p-inserting side of each hole 20p, the leg portion 19p fails to completely close this hole 20p, and there is a fear that a foreign matter intrudes through this recess. Therefore, it is desirable that the recess be closed, for example, by a lid-like member.

(fourth Embodiment)

Therefore, description will be made of a not claimed fourth embodiment in which a foreign matter intrusion prevention lid portion for suitably preventing the intrusion of a foreign matter through the ball circulating member-mounting hole 20p (for mounting the side cap 17p) is formed at each of a pair of leg portions 19p of a side cap 17p.

Namely, in the fourth embodiment, there is provided the side cap in which a peripheral wall of the side cap is substantially uniform over an entire length of a ball circulating passageway, and the foreign matter intrusion prevention lid portion for preventing the intrusion of a foreign matter through the ball circulating member-mounting hole is formed at each leg portion. The side cap 17p of this fourth embodiment differs from the side cap 17p of the third embodiment only in the provision of the foreign matter intrusion prevention lid portions and support portions respectively supporting the foreign matter intrusion prevention lid portions, and the other construction is identical to that of the third embodiment described above. Therefore, only the foreign matter intrusion prevention lid portion and the support portion, supporting the foreign matter intrusion prevention lid portion, will be described, and explanation of the other portions and members will be omitted.

In the side cap 17p of this fourth embodiment, the foreign matter intrusion prevention lid portion 24p and the foreign matter intrusion prevention lid-supporting portion 25p (which supports the foreign matter intrusion prevention lid portion 24p) are formed on an outer surface 23ap of each peripheral wall forming a guide passageway 21p.

In order that the foreign matter intrusion prevention lid portion 24p can suitably prevent a foreign matter from intruding through the ball circulating member-mounting hole 20p, this foreign matter intrusion prevention lid portion 24p has an outer peripheral portion 24ap conforming to an inner shape of the ball circulating member-mounting hole 20p, and when the side cap is mounted on the nut, the foreign matter intrusion prevention lid portion 24p closes a recess formed at the leg portion 19p-inserting side of the ball circulating member-mounting hole 20p. The foreign matter intrusion prevention lid-supporting portion 25p is formed upright on the outer surface 23ap of the peripheral wall in a manner to support the foreign matter intrusion prevention lid portion 24p. Namely, the foreign matter intrusion prevention lid portion 24p is provided on the outer surface 23ap of the peripheral wall through the foreign matter intrusion prevention lid-supporting portion 25p.

Therefore, in the side cap 17p of this fourth embodiment, a foreign matter can be prevented from intruding through the ball circulating member-mounting holes 20p in which the side cap 17p is mounted, and also similar operation and advantages to those of the side cap of the third embodiment can be achieved.

As described above, there is provided the side cap 17p having the ball circulating passageway 27p of which precision is enhanced, and also there is provided the ball screw 10p provided with this side cap.

The ball screw of the invention is not limited to the above first and second embodiments, and various modifications can be made without departing from the subject matter of the invention as defined by the claims.

In each of the above embodiments in which the side cap 17p is formed by combining the pair of side cap-forming members 23p and 23p together, for example, projections and holes, serving as positioning means, can be provided at the division surfaces (joint surfaces) so as to position the two division surfaces relative to each other. Side cap-mounting holes for directly passing the set screws 18p therethrough can be formed in the side cap 17p. Although the side cap 17p is formed by combining the pair of side cap-forming members 23p and 23p together, the side cap does not always need to be divided into the two sections. For example, the side cap can be divided into four sections, and therefore can be formed by four side cap-forming members, in which case the above side cap 17p is further divided at a central portion of the central passageway.

**Claims**

1.  A ball circulating member (17) for use in a ball screw (10) including a threaded shaft (12) having a ball rolling groove (11) formed in an outer peripheral surface thereof, a nut (14) having a ball rolling groove (13) formed in an inner peripheral surface thereof opposed to the outer peripheral surface of the threaded shaft (12), and a plurality of balls (15) provided in a ball track passageway (8) formed between the ball rolling grooves (11, 13) of the nut (14) and the threaded shaft (12);
    the ball circulating member (17) comprising:

    ball scoop-up portions (24) each for scooping-up the balls (15) from the ball track passageway (8) at one side thereof,
    a ball circulating passageway (27) for returning the balls (15), scooped-up at one of the ball scoop-up portions (24), to the ball track passageway (8) at the other side thereof;
    the ball scoop-up portions (24) and the ball circulating passageway (27) being formed integrally with each other, notch portions (25) formed respectively at scoop-up proximal end portions (24a) thereof integrally connecting the ball scoop-up portions (24) respectively to the ball circulating passageway (27), and
    two ball circulating member-forming members (23) which are divided from each other along a division line (PL) extending in a direction of advancing of the balls (15) passing through the interior of the ball circulating member (17),
    **characterized in**
    **that** the division line (PL) starts from the deepest portion of the notch portion (25) at the one side of the ball circulating member (17) and terminates at the deepest portion of the notch portion (25) at the other side of the ball circulating member (17), wherein the deepest portion of the notch portion (25) at which the divisional line (PL) starts and terminates is formed at a position shifted to the ball scoop-up portions (24) with respect to a path of movement of the centers of the balls (15).

2.  The ball circulating member (17) according to claim 1, **characterized in that** each of the two ball circulating member-forming members (23) has a peripheral wall extension portion (23f) extending from a peripheral wall thereof, and that the peripheral wall extension portion (23f) of each of the two ball circulating member-forming members (23) covers opposite sides of the scoop-up proximal end portion (24a) of the mating ball circulating member-forming member (23) from both sides thereof.

3.  The ball screw comprising: the ball circulating member (17) according to claim 1, further comprising:

    a pair of leg portions (19) in which a ball scoop-up passageway (21) for guiding the balls (15) is formed, wherein a ball travelling direction in the ball scoop-up passageway (21) conforms to a tangential line of the threaded shaft (12) and to a lead angle of the ball rolling groove (13) to scoop up the balls (15).

4.  The ball circulating member according to claim 1, wherein the ball circulating member-forming members (23) are point-symmetrically divided from each other along the divisional line (PL), and wherein the ball circulating member (17) is made of resin.

5.  The ball screw comprising:

    the ball circulating member (17) as defined in any one of claims 1, 2 and 4.

**Patentansprüche**

1.  Kugelumlaufelement (17) zum Einsatz in einer Kugelspindel (10), die eine Gewindewelle (12) mit einer in einer Außenumfangsfläche derselben ausgebildeten Kugel-Rollnut (11), eine Mutter (14) mit einer in einer der Außenumfangsfläche des Gewindeschaftes (12) gegenüberliegenden Innenumfangsfläche derselben ausgebildeten Kugel-Rollnut (13) und eine Vielzahl von Kugeln (15) enthält, die in einem Kugelbahn-Verbindungsweg (8) vorhanden sind, der zwischen den Kugel-Rollnuten (11, 13) der Mutter (14) und der Gewindewelle (12) ausgebildet ist; wobei das Kugel-Umlaufelement (17) umfasst:

    Kugel-Aufnehmabschnitte (24), die jeweils die Kugeln (15) aus dem Kugelbahn-Verbindungsweg (18) an einer Seite desselben aufnehmen;
    einen Kugel-Umlaufverbindungsweg (27) zum Zurückführen der an einem der Kugel-Aufnehmabschnitte (24) aufgenommenen Kugeln (15) zu dem Kugelbahn-Verbindungsweg (8) an der anderen Seite desselben;
    wobei die Kugel-Aufnehmabschnitte (24) und der Kugel-Umlaufverbindungsweg (27) integral miteinander ausgebildet sind,
    Einkerbungsabschnitte (25), die jeweils an vorderen Kugelaufnehm-Endabschnitten (24a) ausgebildet sind und die Kugel-Aufnehmabschnitte (24) jeweils mit dem Kugel-Umlaufverbindungsweg (27) integral verbinden, und
    zwei ein Kugel-Umlaufelement bildende Elemente (23), die voneinander entlang einer Trennlinie (PL) getrennt sind, die in einer Transportrichtung der Kugeln (15) verläuft, die den Innenraum des Kugel-Umlaufelementes (17) durchlaufen,
    **dadurch gekennzeichnet, dass**
    die Trennlinie (PL) von dem tiefsten Abschnitt des Einkerbungsabschnitts (25) an der einen Seite des Kugel-Umlaufelementes (17) ausgeht und an dem tiefsten Abschnitt des Einkerbungsabschnitts (25) an der anderen Seite des Kugel-Umlaufelementes (17) endet, wobei der tiefste Abschnitt des Einkerbungsabschnitts (25), an dem die Trennlinie (PL) beginnt und endet, an einer Position ausgebildet ist, die in Bezug auf einen Bewegungspfad der Mittelpunkte der Kugeln (15) zu den Kugel-Aufnehmabschnitten (24) verschoben ist.

2.  Kugel-Umlaufelement (17) nach Anspruch 1, **dadurch gekennzeichnet, dass**
    jedes der zwei ein Kugel-Umlaufelement bildenden Elemente (23) einen Umfangswand-Verlängerungsabschnitt (23f) aufweist, der sich von einer Umfangswand desselben aus erstreckt, und
    der Umfangswand-Verlängerungsabschnitt (23f) jedes der zwei ein Kugel-Umlaufelement bildenden Elemente (23) einander gegenüberliegende Seiten des vorderen Aufnehm-Endabschnitts (24a) des zugehörigen ein Kugel-Umlaufelement bildenden Elementes (23) von beiden Seiten her abdeckt.

3.  Kugelspindel, die das Kugel-Umlaufelement (17) nach Anspruch 1 umfasst, wobei sie des Weiteren umfasst:

    ein Paar Schenkelabschnitte (19), in denen ein Kugel-Aufnehmverbindungsweg (21) zum Führen der Kugeln (15) ausgebildet ist, wobei eine Kugel-Bewegungsrichtung in dem Kugel-Aufnehmverbindungsweg (21) einer Tangentiallinie des Gewindeschaftes (12) und einem Steigungswinkel der Kugel-Rollnut (13) zum Aufnehmen der Kugeln (15) entspricht.

4.  Kugel-Umlaufelement nach Anspruch 1, wobei die ein Kugel-Umlaufelement bildenden Elemente (23) entlang der Trennlinie (PL) punktsymmetrisch voneinander getrennt sind und das Kugel-Umlaufelement (17) aus Kunststoff besteht.

5.  Kugelspindel, die umfasst:

    das Kugel-Umlaufelement (17) nach einem der Ansprüche 1, 2 und 4.

**Revendications**

1.  Elément de circulation de billes (17) destiné à être utilisé dans une vis sphérique (10) comprenant une tige filetée (12) ayant une rainure de roulement de billes (11) formée dans sa surface périphérique externe, un boulon (14) ayant une rainure de roulement de billes (13) formée dans sa surface périphérique interne opposée à la surface périphérique externe de la tige filetée (12), et une pluralité de billes (15) prévues dans une voie de passage de gorge de roulement à billes (8) formée entre les rainures de roulement de billes (11, 13) de l'écrou (14) et la tige filetée (12) ;

l'élément de circulation de billes (17) comprenant :

des parties de collecte de billes (24), chacune pour collecter les billes (15) de la voie de passage de gorge de roulement à billes (8) au niveau de l'un de ses côtés,

une voie de passage de circulation de billes (27) pour ramener les billes (15), collectées au niveau de l'une des parties de collecte de billes (24), jusqu'à la voie de passage de gorge de roulement à billes (8) au niveau de son autre côté ;

les parties de collecte de billes (24) et la voie de passage de circulation de billes (27) étant formées de manière solidaire entre elles,

des parties d'encoche (25) respectivement formées au niveau de ses parties d'extrémité proximale de collecte (24a) raccordant de manière solidaire les parties de collecte de billes (24) respectivement à la voie de passage de circulation de billes (27), et

deux éléments de formation d'élément de circulation de billes (23) qui sont divisés l'un de l'autre le long d'une ligne de division (PL) s'étendant dans une direction d'avancement des billes (15) passant à travers l'intérieur de l'élément de circulation de billes (17),

**caractérisé en ce que** la ligne de division (PL) commence à partir de la partie la plus profonde de la partie d'encoche (25) au niveau du premier côté de l'élément de circulation de billes (17) et se termine au niveau de la partie la plus profonde de la partie d'encoche (25) au niveau de l'autre côté de l'élément de circulation de billes (17), dans lequel la partie la plus profonde de la partie d'encoche (25) au niveau de laquelle la ligne de division (PL) commence et se termine, est formée dans une position décalée par rapport aux parties de collecte de billes (24) par rapport à une trajectoire de mouvement des centres des billes (15).

2. Elément de circulation de billes (17) selon la revendication 1, **caractérisé en ce que** chacun des deux éléments de formation d'élément de circulation de billes (23) a une partie d'extension de paroi périphérique (23f) s'étendant à partir de leur paroi périphérique, et **en ce que** la partie d'extension de paroi périphérique (23f) de chacun des deux éléments de formation d'élément de circulation de billes (23) couvre les côtés opposés de la partie d'extrémité proximale de collecte (24a) de l'élément de formation d'élément de circulation de billes de couplage (23) à partir de leurs deux côtés.

3. Vis sphérique comprenant l'élément de circulation de billes (17) selon la revendication 1, comprenant en outre :

une paire de parties de patte (19) dans laquelle on forme une voie de passage de collecte de billes (21) pour guider les billes (15), dans laquelle une direction de déplacement de billes dans la voie de passage de collecte de billes (21) se conforme à une ligne tangentielle de la tige filetée (12) et à un angle d'attaque de la rainure de roulement de billes (13) pour collecter les billes (15).

4. Elément de circulation de billes selon la revendication 1, dans lequel les éléments de formation d'élément de circulation de billes (23) sont divisés symétriquement les uns par rapport aux autres le long de la ligne de division (PL), et dans lequel l'élément de circulation de billes (17) est réalisé à partir de résine.

5. Vis sphérique comprenant :

un élément de circulation de billes (17) selon l'une quelconque des revendications 1, 2 et 4.

## FIG. 1

## FIG. 2

## FIG. 3

20 (20P)   16 (16P)

14 (14P)

20 (20P)

## FIG. 4

19 (19P)   20 (20P)   17 (17P)   16(16P)   26 (26P)

18 (18P)

14 (14P)

21 (21P)

20 (20P)

15 (15P)

18 (18P)   22 (22P)   21 (21P)   19 (19P)

27 (27P)

## FIG. 5

## FIG. 6

## FIG. 7

## FIG. 8

## FIG. 9

Prior art

## FIG. 10

Prior art

## FIG. 11

170
230  230

190

PL'

190

Prior art

## FIG. 12

170
190
210

240a
240
250

15

BCD
(PL')

Prior art

## FIG. 13

## FIG. 14A

## FIG. 14B

# FIG. 15A

23P

PU

24P

25P

19P

23aP

# FIG. 15B

24aP

24P

19P

25P

23aP

23aP

Prior art

## FIG. 16A

170P

230P  230P

190P

B

A

C

B

D

190P

A

Prior art

## FIG. 16B

27P

21P  22P  21P

D

190P

230P

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003232421 A
- JP 2005083519 A
- US 20050087031 A1
- US 20040123691 A1